(19)

Europäisches Patentamt

European Patent Office

Office européen des brevets

(11) **EP 4 439 296 A1**

(12) **EUROPEAN PATENT APPLICATION**

(43) Date of publication:
**02.10.2024 Bulletin 2024/40**

(21) Application number: **23208160.4**

(22) Date of filing: **07.11.2023**

(51) International Patent Classification (IPC):
**G06F 9/50** *(2006.01)*

(52) Cooperative Patent Classification (CPC):
**G06F 9/5094**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.03.2023 US 202318190226**

(71) Applicant: **Intel Corporation**
**Santa Clara, CA 95054 (US)**

(72) Inventors:
- **Gunther, Stephen H.**
  **Beaverton, 97007 (US)**
- **Praveen Kumar, Gupta**
  **Santa Clara, 95051 (US)**

(74) Representative: **Goddar, Heinz J. et al**
**Boehmert & Boehmert**
**Anwaltspartnerschaft mbB**
**Pettenkoferstrasse 22**
**80336 München (DE)**

(54) **RUN-TIME DETERMINATION AND COMMUNICATION OF ACHIEVABLE CAPABILITY IN A HETEROGENOUS PROCESSING ENGINE ARCHITECTURE**

(57) Embodiments described herein may include apparatus, systems, techniques, and/or processes that are directed to computing systems with heterogenous processing engines. The heterogenous processing engines may have differing capabilities that change dynamically during system operation due, for example, to changing power budgets, frequencies, voltages, and the like of each processing engine. By dynamically exposing and updating the run-time capability of each processing engine based on current operational conditions, the operating system or system software may select the optimal processing engine for a given task, thereby providing more performance, power efficiencies, and better experience to the user.

EP 4 439 296 A1

**Description**

Technical Field

Embodiments of the present disclosure generally relate to the field of computing, in particular, to selecting one of multiple processing engines with differing capabilities to perform a workload.

Background

The complexity of computing systems continues to increase at a fast pace. Today's computing systems may include multiple heterogenous processing engines that provide different capabilities, for example high performance, energy efficiency, task efficiencies, and the like. For example, some processing engines may perform better on different tasks, such as integer, floating point or vector instruction threads. Other processing engines may be better suited to run power-constrained workloads. An operating system assigns a workload to the most optimal processing engine based on the different capabilities of available processing engines and the type of workload to be performed, however, system software typically adopts a static assumption of the relative power and capabilities of the various processing engines available in the system.

As computing systems become more complex, more chips on a package cause increased power-constraints and heat sensitivity. To address power-constraints and heat conditions, computer systems may dynamically adjust the frequency and power of different processing engines, changing relative capabilities of one or more of the processing engines. A dynamic solution is desired that optimally recognizes current system configuration and operational conditions to achieve highest performance and power efficiencies, allowing end-users with varied data processing needs to experience faster computing speeds and a higher level of focused computing power.

Brief Description Of The Drawings

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.

Fig. 1 illustrates a computing system in accordance with various embodiments.

Fig. 2 illustrates another computing system in accordance with various embodiments.

Fig. 3 illustrates power/performance curves of two processing engines in accordance with various embodiments.

Fig. 4 illustrates a flow diagram showing the determination and communication of achievable capability in accordance with various embodiments.

Fig. 5 illustrates a flow performed by a thread scheduler in accordance with various embodiments.

Detailed Description

Embodiments described herein may include apparatus, systems, techniques, and/or processes that are directed to computing systems with heterogenous processing engines. The heterogenous processing engines may have differing capabilities that change dynamically during system operation due, for example, to changing power budgets, frequencies, voltage and the like of each processing engine. By dynamically exposing and updating the run-time capability of each processing engine based on current operational conditions, the operating system or system software may select the optimal processing engine for a given task, thereby providing more performance, power efficiencies, and better experience to the user.

In the following description, various aspects of the illustrative implementations will be described using terms commonly employed by those skilled in the art to convey the substance of their work to others skilled in the art. However, it will be apparent to those skilled in the art that embodiments of the present disclosure may be practiced with only some of the described aspects. For purposes of explanation, specific numbers, materials, and configurations are set forth in order to provide a thorough understanding of the illustrative implementations. It will be apparent to one skilled in the art that embodiments of the present disclosure may be practiced without the specific details. In other instances, well-known features are omitted or simplified in order not to obscure the illustrative implementations.

In the following detailed description, reference is made to the accompanying drawings that form a part hereof, wherein like numerals designate like parts throughout, and in which is shown by way of illustration embodiments in which the subject matter of the present disclosure may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C).

The description may use perspective-based descriptions such as top/bottom, in/out, over/under, and the like. Such descriptions are merely used to facilitate the discussion and are not intended to restrict the application of embodiments described herein to any particular orientation.

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

The term "coupled with," along with its derivatives, may be used herein. "Coupled" may mean one or more of the following. "Coupled" may mean that two or more elements are in direct physical or electrical contact. However, "coupled" may also mean that two or more elements indirectly contact each other, but yet still cooperate or interact with each other, and may mean that one or more other elements are coupled or connected between the elements that are said to be coupled with each other. The term "directly coupled" may mean that two or more elements are in direct contact.

As used herein, the term "module" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable components that provide the described functionality.

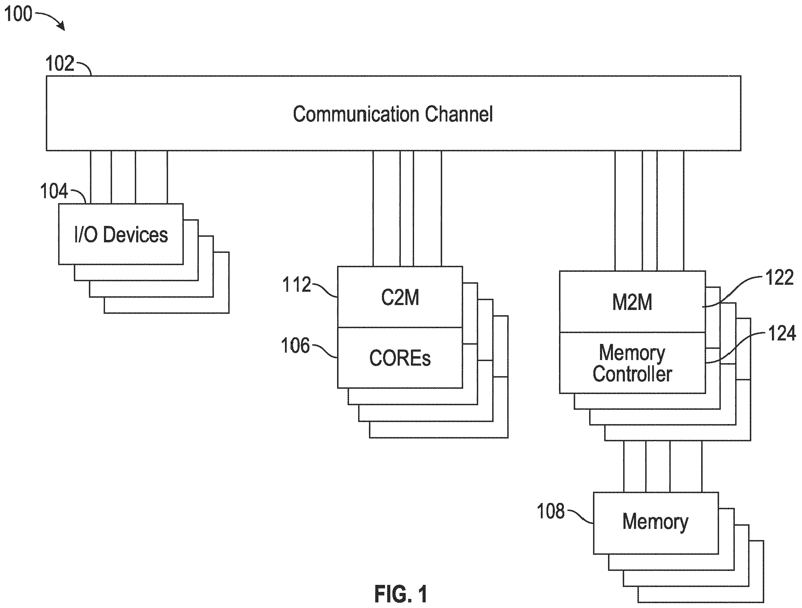

Fig. 1 illustrates a computing system in accordance with various embodiments. System 100 may be any type of computing platform, ranging from small portable devices such as smartphones, tablet computers and so forth to larger devices such as client systems, for example, desktop or workstation systems, server systems and so forth. System 100 includes communication channel 102 through which one or more input/output (I/O) devices 104 and one or more cores 106 communicate to a memory 108. Coupled to cores 106 are core-to-mesh (C2M) units 112. C2M units 112 operate to process requests from cores 106 for memory transactions and send corresponding transactions to memory 108. C2M units 112 may further process the memory transaction from the core, for example, by mapping a virtual address to a physical address, and the like to generate the corresponding memory transaction sent to memory 108 through communication channel 102.

According to some embodiments, I/O devices 104 and cores 106 may be heterogeneous, that is, diverse processing engines. Cores 106 have been referred to as processing engines, but understand that additional logic and circuitry may also be included in cores 106 according to some embodiments. Examples of I/O devices 104 and cores 106 may include any type of processing engine, for example, central processing units (CPUs), graphic processing units (GPUs), large computing system or small microcontroller, various peripheral component interconnect express (PCIe) devices, a phase-locked loop (PLL) unit, an input/output (I/O) unit, an application specific integrated circuit (ASIC) unit, a field-programmable gate array unit, a graphics card, an accelerator, a three-dimensional integrated circuit (3D IC), neural network, video processing core, matrix core, compute accelerator and the like. Note that some I/O devices 104 and/or cores 106 may include a processor complex which may include one or more cores or processing engines. Some of the processing engines of system 100 may be optimized to run integer, floating point or vector instructions and/or power-constrained workloads. Some of the processing engines of system 100 may include a compute accelerator capable of solving machine learning inference tasks.

One or more of the processing engines of system 100 may be a large processing engine designated to run foreground and/or high-performance applications. Another of the processing engines of system 100 may be a small computing engine designated to run low priority background processes. Additionally, another of the processing engines may be on a low power domain of system 100, also processing low priority background processes.

In an embodiment, each core 106 and C2M 112 are components of a system on a chip (SoC). In an embodiment, multiple cores 106 and one or more C2M 112 are components of a SoC. In an embodiment, the majority of the components of system 100 are in a single package with multiple chips or multiple systems.

A mesh to memory (M2M) unit 122 receives and processes received memory transactions from communication channel 102 for memory controller 124. These received memory transactions may originate from any of I/O devices 104 and cores 106 and possibly other devices not shown. Memory controller 124 controls memory accesses to memory 108. Memory 108 may be implemented as a shared virtual memory (SVM). In an embodiment, memory access controller 124 and M2M 122 are components of a SoC. In an embodiment, memory 108, memory controller 124 and the M2M 122 are components of a SoC. In an embodiment, memory controller 124, M2M 122, cores 106 and C2M 112 are components of a system on a chip (SoC).

According to various embodiments, memory controller 124 may be used to control one or more different memory system clock domains, or channels, each for servicing a combination of different processing engine types.

While a configuration of system 100 has been described, alternative embodiments may have different configurations. While system 100 is described as including the components illustrated in Fig. 1, alternative embodiments may include additional components that facilitate the operation of system 100.

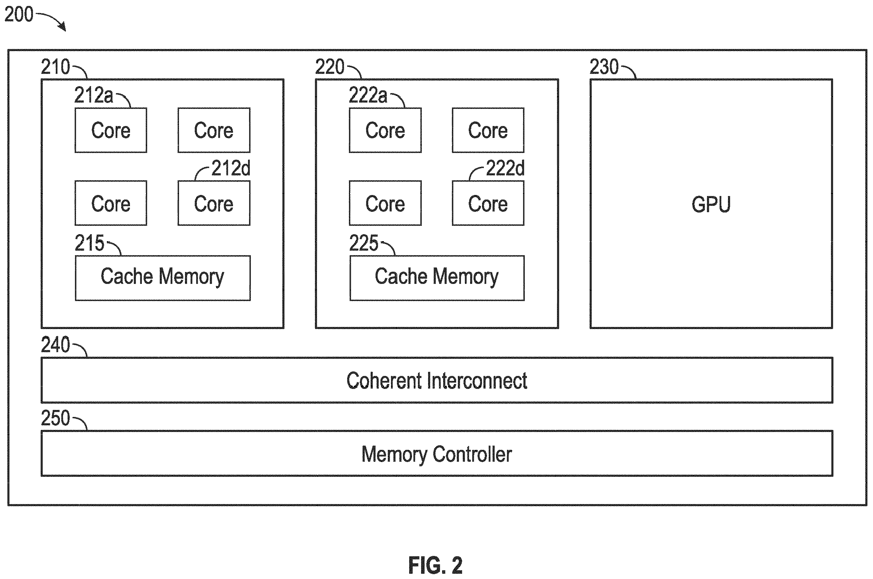

Referring now to Fig. 2, shown is a block diagram of a representative computing system in accordance with various embodiments. Computing system 200 may be any type of computing platform, ranging from small portable devices such as smartphones, tablet computers and so forth to larger devices such as client systems, for example, desktop or workstation systems, server systems and so forth.

As seen in Fig. 2, computing system 200 includes a first core domain 210 having a plurality of first cores 212a - 212d. In an example, these cores may be low power cores such as in-order cores. In turn, these cores couple to a cache memory 215 of core domain 210. In addition, computing system 200 includes a second core domain 220. In the illustration of Fig. 2, second core domain 220 has a plurality of second cores 222a - 222d. In an example, these cores may be higher power-consuming cores than first cores 212. In an embodiment, the second cores may be out-of-order cores. In turn, these cores couple to a cache memory 225 of core domain 220. Note that while the example shown in Fig. 2 includes 4 cores in each domain, understand that more or fewer cores may be present in a given domain in other examples. In an example, the cores may be on different die and/or may be virtual cores.

With further reference to Fig. 2, a graphics domain 230 also is provided, which may include one or more graphics processing units (GPUs) configured to independently execute graphics and other workloads, e.g., provided by one or more cores of core domains 210 and 220. As an example, GPU domain 230 may be used to provide display support for a variety of screen sizes, in addition to providing graphics and display rendering operations.

As seen, the various domains couple to a coherent interconnect 240, which in an embodiment may be a cache coherent interconnect fabric that in turn couples to an integrated memory controller 250. Coherent interconnect 240 may include a shared cache memory, such as an L3 cache, in some examples. In an embodiment, memory controller 250 may be a direct memory controller to provide for multiple channels of communication with an off-chip memory, such as multiple channels of a DRAM (not shown for ease of illustration).

In different examples, the number of the core domains may vary. For example, for a low power SoC suitable for incorporation into a mobile computing device, a limited number of core domains such as shown in Fig. 2 may be present. Still further, in such low power SoCs, core domain 220 including higher power cores may have fewer numbers of such cores. For example, in one implementation two cores 222 may be provided to enable operation at reduced power consumption levels. In addition, the different core domains may also be coupled to an interrupt controller to enable dynamic swapping of workloads between the different domains.

In yet other embodiments, a greater number of core domains, as well as additional optional logic may be present, in that a computing system may be scaled to higher performance (and power) levels for incorporation into other computing devices, such as desktops, servers, high-performance computing systems, base stations and the like. As one such example, 4 core domains each having a given number of out-of-order cores may be provided. Still further, in addition to optional GPU support, one or more accelerators to provide optimized hardware support for particular functions (e.g. web serving, network processing, switching or so forth) also may be provided. In addition, an input/output interface may be present to couple such accelerators to off-chip components.

Computing system 100 and computing system 200 may include multiple heterogeneous processing engines that process diverse applications that have diverse performance requirements. Each of the cores may run at a different frequency and voltage level and have different power budgets, each of which may be dynamically adjusted per the needs of the computing system. Further, the relative capabilities of processing engines may periodically change during operation of a computing system. According to various embodiments, various capabilities of processing engines may include performance, energy efficiency, effective cache sizes, memory bandwidth and/or latency, and the like. Other capability changing events may occur during run-time, such as dynamically adjusting the core microarchitecture, for example, by turning off an execution units, changing the size of the out of order window, and the like to meet power budgets and other system constraints.

According to various embodiments, capabilities of each processing engine may be periodically determined considering current operating conditions and changes in capabilities communicated to the operating system of a computing system. Performance is a product of the work that can be done each clock cycle (instructions per cycle (IPC)) and operating frequency. Power budget is a product of switching capacitance (Cdyn), frequency, and the square of the operating voltage plus any leakage current that occurs. The following formulas illustrate these relationships:

$$Performance = Frequency * IPC$$

$$Power = ((Cdyn * frequency * voltage^2) + leakage)$$

According to various embodiments, power budgets may change during system operation due to many factors, including, but not limited to the number of active processing engines utilizing the systems power budget, user power inputs, heat conditions of the computing system and the like. Cdyn, leakage, and the frequency / voltage relationship is known for each processing engine, allowing firmware to translate an available power budget into achievable frequency. The squared voltage in the power formula means that power is quadratic with frequency, while performance is linear with frequency. As such, at a given power budget, a first processing engine may have the capability to outperform a second processing engine for a particular task. At a different power budget, the second processing engine may have the capability to outperform the first processing engine for the particular task.

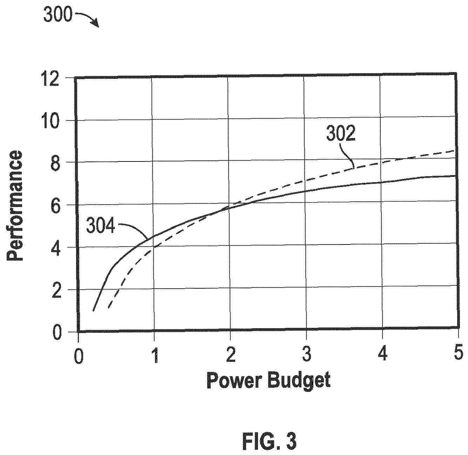

Fig. 3 illustrates power/performance curves of two processing engines in accordance with various embodiments. As illustrated, power budget vs. achievable performance is mapped for a first processing engine, curve 302 and a second processing engine, curve 304. As illustrated, when the power budget is low and constrained, the second processing engine outperforms the first processing engine. When the power budget is high and not constrained, the first processing engine outperforms the second processing engine. As illustrated in Fig. 3, the scaling of power budget from 0 to 5 and the scaling of performance from 0 to 12 are arbitrary, normalized values and not necessarily corelated to watts, instructions per cycle, or the like. Although illustrated as power budget vs. achievable performance curves, any capability, for example, energy efficiency, memory latency/bandwidth, and the like may be defined per power budget and utilized according to various embodiments.

For a computing system with different types of processing engines, the IPC, switching capacitance, and the frequency / voltage curve may be different for each of the processing engines, thus the power vs. capability curves may also be different for each of the processing engines. In addition, the relative capability of two processing engines is not constant - the relative capability may be a function of the available power budget. At low available power budgets, the more efficient compute element may be capable of providing higher performance, while at high available power budgets, a compute element with more raw performance capability can provide higher performance. Other capabilities may also change per processing engine during run-time operation.

As more logic is added to package within a fixed platform design point, computing systems are becoming more power constrained, and hence more likely to run into scenarios where the relative capability of processing engines change during system operation. According to various embodiments, it is advantageous to have the operating system and/or system software have access to the current and dynamic relative capabilities of the processing engines, such that the optimal processing engine may be chosen for a particular workload. The power budget available to the processing engines is tracked over time and converted to achievable capability.

According to various embodiments, achievable frequency may be converted to achievable capability, which may be then normalized for all processing engines. These normalized capabilities may be made available to the operating system or system software via an achievable capability table such as illustrated in Table 1. Such a table may be updated when the relative capabilities of each of the computing engines change materially.

Table 1 below illustrates a sample achievable capability table in accordance with some embodiments. A normalized achievable capability is listed per processing engine. The normalized achievable capability per processing engine is listed for each workload class. According to some embodiments, Class 0 may be for tasks that are primarily integer instructions, Class 1 may be for tasks that are floating point instructions, Class 2 may be for tasks that are primarily vector instructions and Class 3 may be for tasks that do not scale with higher performance. As such, the operating or system software may consult the achievable capability table when determining the optimal processing engine to assign a specific class workload task. Although energy efficiency, performance and other capabilities are illustrated in Table 1, fewer or more capabilities may be included in an achievable capability table according to various embodiments.

Table 1.

| Proc Eng | Class3 | | | Class2 | | | Class1 | | | Class0 | | |
|---|---|---|---|---|---|---|---|---|---|---|---|---|
| | EE Cap* | Perf Cap** | Other Cap*** | EE Cap | Perf Cap | Other Cap | EE Cap | Perf Cap | Other Cap | EE Cap | Perf Cap | Other Cap |
| 0 | 50 | 40 | 20 | 100 | 100 | 70 | 100 | 70 | 50 | 80 | 50 | 20 |
| 1 | 50 | 40 | 70 | 100 | 100 | 50 | 100 | 70 | 80 | 80 | 50 | 90 |
| 2 | 60 | 40 | 50 | 50 | 30 | 85 | 50 | 40 | 20 | 70 | 40 | 40 |
| … | | | | | | | | | | | | |
| n | 60 | 40 | 30 | 50 | 30 | 20 | 50 | 40 | 40 | 70 | 40 | 60 |
| *Energy Efficiency, ** Performance Capability, ***Other Capability | | | | | | | | | | | | |

According to some embodiments, workload classes may be determined based on compute and memory access of the instruction stream, which may include instruction set composition, hardware resource usage and/or caching performance. According to some embodiments, workload class may change with time. In addition, the duration of a particular workload class may not be static. According to some embodiments, an adaptive mechanism for determining and updating the workload class information may be used. Such a mechanism may be part of firmware and/or may include hardware-firmware functionality.

The achievable capability table may be stored in system memory and periodically updated during system operation according to current operating conditions and power budget constraints. Periodically performing the calculations to determine achievable capability may be triggered by a set time cycle, for example, every 10 ms, or alternatively triggered due to changing power constraints and power budgets. The achievable capability table may provide relative performance, energy efficiency capability, and/or other capabilities for each processing engine in the computing system. Other capabilities may include memory bandwidth constraints, user preferences, and other dynamic operating conditions that may be used by operating system software in determining optimal processing engines to assign workloads and tasks. Although illustrated as a table, capability data may be stored in any accessible form and used to make workload assignment determinations according to various embodiments.

According to various embodiments, the capability of each processing engine may be dependent on the achievable frequency and relative IPC ratio for each of the workload classes. The achievable frequency is dependent on the available power budgets, which is a function of the power / power delivery / temperature constraints placed on the computing system, and the power consumed by other processing engines in the computing system. Note that there may be many different power related limits placed on the computing system. As the power consumption of other processing engines in the computing system increases, the power budget available for the processing engines decreases, and hence the achievable frequency decreases. Hence the achievable frequency and thus achievable capability for each processing engine changes during system operation.

According to various embodiments, a capability of each processing engine may be dependent and may change based on other system conditions other than or including achievable frequency and/or power budget, for example, thermal conditions, throughput requirements, user preferences, and the like.

According to some embodiments, the available power budget is monitored by power management firmware during system operation. A power balancing algorithm may periodically allocate power budget to each of the processing engines. Power management firmware may translate the available power budget into achievable frequency by solving for frequency in the power equation.

$$Frequency = (Power - leakage) / ((Cdyn * V^2)$$

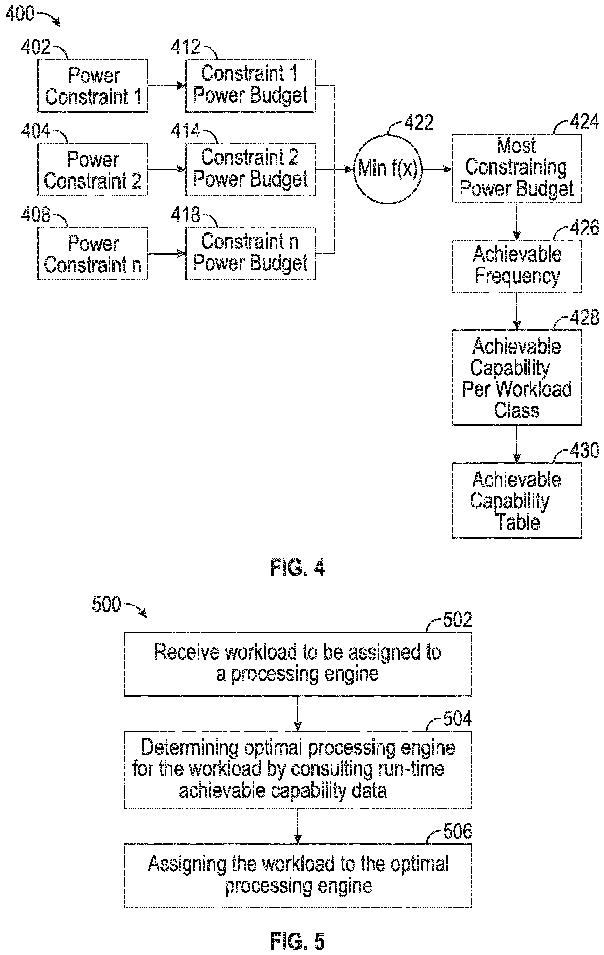

Fig. 4 illustrates a flow diagram showing the determination and communication of achievable capability in accordance with various embodiments. Flow diagram 400 may be performed by a power manager operated by system software or device software. Current operating conditions affect multiple power constraint inputs 402, 404 and 408 to be used in the determination of achievable capability. Such power constraints may include maximum wattage or current that may be consumed, power constraints due to operating temperature constraints, and the like. For a given power constraint 402, 404 and 408 processing engine power budgets 412, 414 and 418, respectively, are determined in similar units of measurement, for example, in available watts. The most constraining power budget 424 for a processing engine is determined by minimum function 422. From the most constraining power budget 424, the highest achievable frequency is determined, step 426. From the highest achievable frequency, the achievable capability per workload class is determined, step 428. These steps are repeated for each processing engine in the computing system. If the achievable capability values for the processing engines have changed above a nominal level, for example, a particular threshold, the newly calculated data is loaded and made available to system software and, for example, stored in system memory, block 430.

According to some embodiments, achievable capability may be calculated for each processing engine every time the power budget is rebalanced. Alternatively, the achievable capability may be recalculated according to a set time period, for example, every 15 ms. When relative capability changes materially, the achievable capability table is updated with the new capability, and the updated information in the table is used by the operating system and/or system software when choosing where to schedule software threads.

Fig. 5 illustrates a flow performed by a thread scheduler in accordance with various embodiments. A thread scheduler receives a workload to be assigned to a processing engine, step 502. The thread scheduler determines an optimal processing engine to be assigned to the workload by consulting, for example, a run-time achievable capability table, step 504. The run-time achievable capability table contains the achievable capability of multiple processing engines based on current operating conditions and power budgets. The achievable capability may be a set of performances based on workload type. The achievable capability table may be periodically updated reflecting current achievable capability during operation of a computing system. The achievable capability table may include varying capabilities including performance, energy efficiency, memory bandwidth performance and other such capabilities that may be used to select the optimal processing engine to be assigned the workload. After making the determination, the thread scheduler assigns the workload to the optimal processing engine, step 506.

Various embodiments may include any suitable combination of the above-described embodiments including alternative (or) embodiments of embodiments that are described in conjunctive form (and) above (e.g., the "and" may be "and/or"). Furthermore, some embodiments may include one or more articles of manufacture (e.g., non-transitory computer- readable media) having instructions, stored thereon, that when executed result in actions of any of the above-described embodiments. Moreover, some embodiments may include apparatuses or systems having any suitable means for carrying out the various operations of the above-described embodiments.

The above description of illustrated embodiments, including what is described in the Abstract, is not intended to be exhaustive or to limit embodiments to the precise forms disclosed. While specific embodiments are described herein for illustrative purposes, various equivalent modifications are possible within the scope of the embodiments, as those skilled in the relevant art will recognize.

These modifications may be made to the embodiments in light of the above detailed description. The terms used in the following claims should not be construed to limit the embodiments to the specific implementations disclosed in the specification and the claims. Rather, the scope of the invention is to be determined entirely by the following claims, which are to be construed in accordance with established doctrines of claim interpretation.

## EXAMPLES

The following examples pertain to further embodiments. An example may be an method, comprising: determining a first achievable capability for a first processing engine based on current operating conditions; determining a second achievable capability for a second processing engine based on the current operating conditions, wherein the first achievable capability is different in magnitude than the second achievable capability; and selecting one of the first processing engine and the second processing engine to perform a workload; wherein the selecting is based on the first achievable capability and the second achievable capability.

An example may include storing the first achievable capability in an achievable capability table if the first achievable capability differs more than a threshold amount from a previous achievable capability.

An example may include re-determining the first achievable capability and the second achievable capability based on new operating conditions.

An example may include wherein the determining the first achievable capability is performed periodically during operation of a system.

An example may include wherein the determining the first achievable capability is performed upon a change in available power budget.

An example may include wherein the determining the first achievable capability comprises: determining current power constraints; determining available power budgets for each of the current power constraints; selecting a most constraining power budget from the available power budgets; determining an achievable frequency for the most constraining power budget; and determining the first achievable capability based on the achievable frequency.

An example may include wherein the determining the first achievable capability is determined for multiple classes of workloads.

An example may include wherein the multiple classes of workloads includes at least one of an integer instruction workload, a floating point instruction workload, and a vector instruction workload.

An example may include wherein the first achievable capability includes at least one of a performance capability, an energy efficiency capability, and a memory bandwidth capability.

An example may include an apparatus comprising: a first processing engine with a first achievable capability; a second processing engine with a second achievable capability, wherein the first achievable capability is different in magnitude than the second achievable capability; and a thread scheduler to determine an optimal processing engine of the first processing engine and the second processing engine to perform a workload, wherein the thread scheduler to determine the optimal processing engine based on the first achievable capability and the second achievable capability.

An example may include a power manager to determine current power constraints, to determine available power budgets for each of the current power constraints, to select a most constraining power budget from the available power budgets, to determine an achievable frequency for the most constraining power budget, and to determine the first achievable capability based on the achievable frequency.

An example may include wherein the power manager to periodically update the first achievable capability and the second achievable capability upon a change in the current power constraints.

An example may include wherein the first achievable capability comprises a data value for each of multiple classes of workloads.

An example may include wherein the multiple classes of workloads comprise one of an integer instruction workload, a floating-point instruction workload, and a vector instruction workload.

An example may include wherein the first achievable capability includes at least one of a performance capability, an energy efficiency capability, and a memory bandwidth capability.

Another example may include an apparatus comprising means to perform one or more elements of a method described in or related to any of examples herein, or any other method or process described herein.

Another example may include one or more non-transitory computer-readable media comprising instructions to cause an electronic device, upon execution of the instructions by one or more processors of the electronic device, to perform one or more elements of a method described in or related to any of examples herein, or any other method or process described herein.

Another example may include an apparatus comprising logic, modules, or circuitry to perform one or more elements of a method described in or related to any of examples herein, or any other method or process described herein.

Another example may include a method, technique, or process as described in or related to any of examples herein, or portions or parts thereof.

Another example may include an apparatus comprising: one or more processors and one or more computer readable media comprising instructions that, when executed by the one or more processors, cause the one or more processors to perform the method, techniques, or process as described in or related to any of examples herein, or portions thereof.

Another example may include a signal as described in or related to any of examples herein, or portions or parts thereof.

Understand that various combinations of the above examples are possible.

Note that the terms "circuit" and "circuitry" are used interchangeably herein. As used herein, these terms and the term "logic" are used to refer to alone or in any combination, analog circuitry, digital circuitry, hard wired circuitry, programmable circuitry, processor circuitry, microcontroller circuitry, hardware logic circuitry, state machine circuitry and/or any other type of physical hardware component. Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. Still further embodiments may be implemented in a computer readable storage medium including information that, when manufactured into a SoC or other processor, is to configure the SoC or other processor to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present disclosure has been described with respect to a limited number of implementations, those skilled in the art, having the benefit of this disclosure, will appreciate numerous modifications and variations therefrom. It is intended that the appended claims cover all such modifications and variations.

**Claims**

1. A method comprising:

   determining a first achievable capability for a first processing engine based on current operating conditions;
   determining a second achievable capability for a second processing engine based on the current operating conditions, wherein the first achievable capability is different in magnitude than the second achievable capability; and
   selecting one of the first processing engine and the second processing engine to perform a workload; wherein the selecting is based on the first achievable capability and the second achievable capability.

**2.** The method of claim 1, further comprising
storing the first achievable capability in an achievable capability table if the first achievable capability differs more than a threshold amount from a previous achievable capability.

**3.** The method of claim 1, further comprising re-determining the first achievable capability and the second achievable capability based on new operating conditions.

**4.** The method of claim 1, wherein the determining the first achievable capability is performed periodically during operation of a system.

**5.** The method of claim 1, wherein the determining the first achievable capability is performed upon a change in available power budget.

**6.** The method of claim 1, wherein the determining the first achievable capability comprises:

determining current power constraints;
determining available power budgets for each of the current power constraints;
selecting a most constraining power budget from the available power budgets;
determining an achievable frequency for the most constraining power budget; and
determining the first achievable capability based on the achievable frequency.

**7.** The method of claim 1, wherein the determining the first achievable capability is determined for multiple classes of workloads.

**8.** The method of claim 7, wherein the multiple classes of workloads includes at least one of an integer instruction workload, a floating point instruction workload, and a vector instruction workload.

**9.** The method of any one of claims 1-8, wherein the first achievable capability includes at least one of a performance capability, an energy efficiency capability, and a memory bandwidth capability.

**10.** A computer-readable storage medium including computer-readable instructions, when executed, to implement a method as claimed in any one of claims 1-9.

**11.** An apparatus comprising means to perform a method as claimed in any one of claims 1 to 9.

**12.** An apparatus comprising:

a first processing engine with a first achievable capability;
a second processing engine with a second achievable capability, wherein the first achievable capability is different in magnitude than the second achievable capability; and
thread scheduling means for determining an optimal processing engine of the first processing engine and the second processing engine to perform a workload, the thread scheduling means for determining the optimal processing engine based on the first achievable capability and the second achievable capability.

**13.** The apparatus of claim 12, further comprising power manager means for determining current power constraints, for determining available power budgets for each of the current power constraints, for selecting a most constraining power budget from the available power budgets, for determining an achievable frequency for the most constraining power budget, and for determining the first achievable capability based on the achievable frequency.

**14.** The apparatus of claim 13, wherein the power manager means for periodically updating the first achievable capability and the second achievable capability upon a change in the current power constraints.

**15.** The apparatus of claim 12, wherein the first achievable capability comprises a data value for each of multiple classes of workloads.

**FIG. 1**

**FIG. 2**

FIG. 3

400

402 Power Constraint 1 → 412 Constraint 1 Power Budget

404 Power Constraint 2 → 414 Constraint 2 Power Budget

408 Power Constraint n → 418 Constraint n Power Budget

422 Min f(x)

424 Most Constraining Power Budget

426 Achievable Frequency

428 Achievable Capability Per Workload Class

430 Achievable Capability Table

**FIG. 4**

500

502 Receive workload to be assigned to a processing engine

504 Determining optimal processing engine for the workload by consulting run-time achievable capability data

506 Assigning the workload to the optimal processing engine

**FIG. 5**

EP 4 439 296 A1

# EUROPEAN SEARCH REPORT

Europäisches Patentamt
European Patent Office
Office européen des brevets

Application Number

EP 23 20 8160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/064426 A1 (GUPTA PRAVEEN KUMAR [US] ET AL) 4 March 2021 (2021-03-04) * paragraphs [0033], [0036], [0043], [0074], [0130] – [0133], [0141], [0155], [0156], [0164] * * paragraphs [0167], [0173] * ----- | 1-15 | INV. G06F9/50 |
| X | US 2014/189301 A1 (GORBATOV EUGENE [US] ET AL) 3 July 2014 (2014-07-03) * paragraphs [0033], [0035] – [0039], [0046], [0047], [0050], [0051], [0053], [0056] – [0060] * ----- | 1-15 | |

TECHNICAL FIELDS SEARCHED (IPC)

G06F

The present search report has been drawn up for all claims

| Place of search | Date of completion of the search | Examiner |
|---|---|---|
| The Hague | 27 February 2024 | Buzgan, C |

EPO FORM 1503 03.82 (P04C01)

## ANNEX TO THE EUROPEAN SEARCH REPORT
## ON EUROPEAN PATENT APPLICATION NO.

**EP 23 20 8160**

This annex lists the patent family members relating to the patent documents cited in the above-mentioned European search report.
The members are as contained in the European Patent Office EDP file on
The European Patent Office is in no way liable for these particulars which are merely given for the purpose of information.

**27-02-2024**

| Patent document cited in search report | | Publication date | Patent family member(s) | | | Publication date |
|---|---|---|---|---|---|---|
| US 2021064426 | A1 | 04-03-2021 | CN | 114207597 | A | 18-03-2022 |
| | | | EP | 4022419 | A1 | 06-07-2022 |
| | | | US | 2021064426 | A1 | 04-03-2021 |
| | | | US | 2023297424 | A1 | 21-09-2023 |
| | | | WO | 2021040951 | A1 | 04-03-2021 |
| US 2014189301 | A1 | 03-07-2014 | CN | 104969182 | A | 07-10-2015 |
| | | | US | 2014189301 | A1 | 03-07-2014 |
| | | | WO | 2014105175 | A1 | 03-07-2014 |

EPO FORM P0459

For more details about this annex : see Official Journal of the European Patent Office, No. 12/82